# EUROPEAN PATENT SPECIFICATION

(11) **EP 1 198 945 B1**
(45) Date of publication and mention of the grant of the patent: **28.06.2006**
(21) Application number: 00952100.6
(22) Date of filing: 02.08.2000
(51) Int. Cl.: H04M 7/00, H04L 12/56

(54) **AN IP BASED TELEPHONE SYSTEM**
IP - BASIERTES FERNSPRECHSYSTEM
RESEAU TELEPHONIQUE IP

(30) Priority: 04.08.1999 SE 9902842; 04.08.1999 US 366684
(43) Date of publication of application: 24.04.2002
(73) Proprietor: TELEFONAKTIEBOLAGET LM ERICSSON (publ), 164 83 Stockholm (SE)
(72) Inventor: SJÖLUND, Jan, S-132 37 Saltsjö-Boo (SE); FURTENBACK, Ros-Marie, S-121 36 Johanneshov (SE); GJÄRDMAN, Jan, S-123 52 Farsta (SE); NYLANDER, Tomas, S-130 37 Stavsnäs (SE)
(74) Representative: Herbjörnsen, Rut
(86) International application number: PCT/SE2000/001534
(87) International publication number: WO 2001/011856

(56) References cited:
- WO-A1-97/33412
- WO-A1-98/44713
- WO-A1-99/13635
- WO-A2-98/59469
- GB-A- 2 331 197

## Description

### Field of invention

The invention is directed to telephony systems. The invention is of particular relevance to telephony systems in which telephone traffic is transmitted at least in part over an IP based network, such as a computer network or the Internet.

### Background art

The advantages of transmitting voice information over a packet or cell switched network has long been recognised. The relative low cost of utilising packet switched networks such as the internet in place of a circuit switched network has generated growing interest and many telecom operators now claim that packet switching surpasses circuit-switched voice transmission in terms of bandwidth usage in their networks. This is due in part to the increase in products that provide voice over IP functions. However, it is also becoming increasingly interesting for network operators to enable telephone calls originating in a standard circuit switched network to be routed at least in part via a packet switched network without altering the way in which a user utilises a telephone or other telephony equipment.

An example of such an arrangement is described in British patent application No. GB 2 331 197. In this known arrangement, a circuit switched trunk network is replaced by a packet switched IP network. This has the advantage of allowing the telecom operator to keep the cost of trunk calls down while still utilising the regular circuit switched systems.

However, as packet switched technology gains importance compared to circuit switching, there is a need to incorporate more of the advantages of packet switched functions into a telecommunications system. Yet, if telecom operators are to continue receiving returns on the substantial investment represented by a circuit switched infrastructure, there is similarly a need to retain as much as possible of the circuit switched system.

WO 97/33412 discloses a system for interconnecting telephony communication equipment with Internet Protocol (IP) networks without the need for special adaptation equipment. Communication through the Internet may be established through an Internet server or through a PSTN network. In both cases the communication through the Internet is controlled by the respective Internet server.

WO 98/144713 discloses a method and an arrangement for connecting a computer to a telephone exchange via the Internet in order to set up a telephone connection. The aim is to enable IP telephony using a computer as an end-user terminal, to make phone calls, for example while surfing the Internet using the same computer. Access to the Internet is provided in a way common in the art, typically by means of a modem. This document does not address the connection of telephones to a computer network

### SUMMARY OF INVENTION

It is an object of the present invention to switching, incorporate more of the advantages of packet switched functions into a telecommunications system while retaining as much as possible of the circuit switched system.

This object is achieved by a method for establishing a telephone call between a subscriber and a further party through a computer network, said subscriber being connected to a telephone exchange, capable of handling circuit switched calls, through the computer network, said method having the characterising features set out in claim 1.

The invention also relates to a telecommunication system including a telephone exchange, at least one subscriber for voice traffic and a computer network interposed between said subscriber and telephone exchange, capable of handling circuit switched calls, said telecommunication system having the characterising features set out in claim 9, and to a telephone exchange capable of handling circuit switched calls, including means for connecting to an IP based packet switched network, and having the characterising features set out in claim 21.

The invention provides a hybrid arrangement which allows an existing circuit switched telephony network to be deployed on a packet switched network. Essentially, the circuit switched underlying transport network is replaced with that of an IP based package switched network, while the circuit switched infrastructure, such as terminals, telephone exchanges and the like are retained with modifications. In preferred embodiments of the invention, both a subscriber and a local telephone exchange are connected to, and separated by, a computer network. Signalling between the subscriber and exchange are effected using a standard user to network protocol, such as V5.1 for PSTN and ISDN basic rate interface (BRI) or DSS1 for ISDN primary rate interface (PRI). This standard user to network protocol is overlaid on an IP based network protocol, such as TCP or UDP. By utilising protocols that are conventionally utilised by the counterpart circuit switched system elements the transition from circuit switched to IP-based packet switched network transport can be achieved in a fast and secure fashion since the network elements will be interchangeable with various vendors equipment. Furthermore, the existing services supported by the standard protocols will be supported in the packet switched network.

Moreover, the connection of the subscriber, or the access node to which a subscriber is coupled, to the IP-based network enables the full future exploitation IP-based network without extensive modification of the system.

### BRIEF DESCRIPTION OF THE DRAWINGS

Further objects and advantages of the present invention will become apparent from the following description of the preferred embodiments that are given by way of example with reference to the accompanying drawings, in which:
- Fig. 1: schematically depicts a telecommunications network according to the present invention,
- Fig. 2: illustrates the arrangement of a telephony server,
- Fig. 3: shows an access node according to the present invention, and
- Fig. 4: illustrates the signalling between the various elements of the network in Fig. 1,
- Fig. 5: illustrates the interaction of the network of Fig. 1 with an adjacent packet switched network,
- Fig. 6: illustrates a first embodiment of a network element adapted to interact with adjacent networks,
- Fig. 7: illustrates a second embodiment of a network element adapted to interact with adjacent networks, and
- Fig. 8: illustrates a third embodiment of a network element adapted to interact with adjacent networks.

### DETAILED DESCRIPTION OF THE DRAWINGS

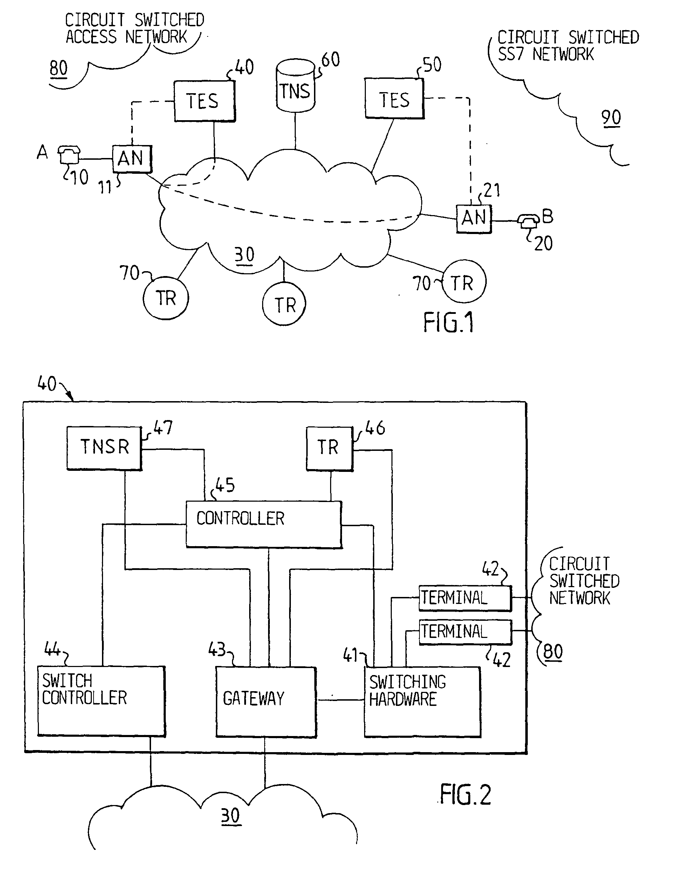

Fig. 1 illustrates a hybrid network according to the present invention wherein a call is ongoing between an A-subscriber 10, represented by the telephone A on the left-hand side of the figure, and a B-subscriber 20 shown on the right-hand side of the figure. The subscribers are respectively connected to an access node 11, 21, and these access nodes 11, 21 are in turn connected to a computer or similar IP-based packet switched network 30, which is typically the Internet. Also connected to the computer network 30 are a telephony server 40, which is the host server for subscriber A 10 and controls the establishment of calls to and from subscriber A 10, and a similar host telephony server 50 for subscriber B 20. The telephony servers 40, 50 are AXE exchanges with modifications as described below with reference to Fig. 2. They perform the equivalent role of a local exchange or end office in a standard circuit switched telephony system with the significant different that they utilise the IP-based packet switched network as a switch. Each telephony server 40, 50 is also capable of handling circuit switched calls and thus interworking with a traditional circuit switched network, as is illustrated by the illustrated interface in telephony server 40 to a circuit switched access network 80 and the interface in telephony server 50 to a circuit switched SS7 network 90.

A telephony number server 60 is also connected to the computer network 30. The telephony number server 60 is essentially a data base containing lookup tables for converting the telephone number identifying a subscriber to an IP address or addresses of the host telephony server 40, 50 for the subscriber, at which the call will be terminated. It is implemented on a standard UNIX DNS server with BIND software using standard DNS record types, which translate e.164 numbers to IP addresses of the telephony server endpoints of the network.. Hence the input to the lookup table is an e.164 destination (B-number) or part of this number. The output would be an IP address or addresses indicating the host telephony server for the subscriber in question. The telephony number server 60 holds addresses only for those subscribers connected to its own network 30. The IP addresses are defined in advanced and each subscriber, or each physical access to the IP network, is assigned an address. The IP address preferably identifies a UDP port, which could be a fixed relationship with a timeslot that is utilised. For some UDP ports the routing information included in an IP package may include the UDP port and the IP address within the port.

A number of telephony resource devices 70 are also connected to the computer network at various locations. These are the general telephony resources utilised by a telephony server 40, 50 for the support of a call. Typical resources include, but are not limited to, answering machines, conference call devices, tone senders/receivers, tone detectors, voice mail systems and echo cancellers. It is preferable that these resources be centrally located in the computer network 30 rather than associated with a telephony server. This would substantially increase their level of utilisation and render them more cost effective. However, since telephony resources of the kind mentioned above are already available in a conventional AXE exchange these resources are retained in the telephony server 40 in preferred embodiment shown in Fig. 1.

Fig. 2 is a schematic representation of a telephony server 40. The elements of the telephony server 40 include conventional switching hardware 41 for assuring circuit switched connections in the connected circuit switched network. A number of terminals 42 are connected to the switching hardware, and typically include a T1 transmission service terminal and an E1 transmission service terminal. Each terminal is connected to an associated circuit switched network, represented in Fig. 2 by the network 80. The switching hardware 41 is further connected to a gateway 43 which incorporates a PCM to IP adapter for converting a PCM encoded 64kbps channel to IP packets for transmission over the IP-based network and vice versa. The PCM to IP converter 43 essentially packs the 64kbps bit stream destined to be transmitted over the computer network 30 into IP compatible packets or datagrams, and similarly unpacks packets arriving at the telephony server 40. An IP switch controller 44 is further provided for assuring the virtual switch formed by the computer network 30 for calls that utilise the computer network. The IP switch controller 44 essentially has a logical view of the IP network 30 as a giant switch with the ingress and egress points to the switch being the various media gateways from the telephony server 40, such as the gateway 43, and the subscriber access nodes 11, 12. The IP switch controller needs to access hardware to enable it to communicate with and control the various media gateways, however, it need not incorporate hardware itself but rather the same IP network hardware interface as the gateway 43. The telephony server further includes a controller 45 for controlling the switching function of the various elements 41, 43, 44. The controller 45 also deals with call setup and sends the required messages in the agreed user-to-network protocol, e.g. V5.x or DSS1 to the subscribers 10 hosted by the server 40. The controller 45 incorporates a routing function for dealing with all types of call transmission paths, i.e. calls transmitted entirely within the circuit switched network, calls transmitted between the circuit switched network and the computer network and calls transmitted within the computer network 30.

As mentioned earlier, a number of telephony resources are available in the conventional AXE exchange. These are represented in the telephony server 40 by the block 46. The seizing of these resources for a call is controlled by the controller 45. The resources are then passed on to the call via the switching hardware 41 or circuit switched transmission paths, or the gateway 43 if the call involves a subscriber on the packet switched network 30.

The various elements in the telephony server 40 represented by the switching hardware 41 and the terminals 42 are necessary only for enabling a voice path to be routed through the telephony server to a circuit switched newtork. If a call is established between two subscribers 10, 20 which are connected to the IP network, these elements will play no part in the communication. The gateway 43 is also utilised for inter-network calls, however, it may also be required for providing a voice path when the telephony resources 46 are located as illustrated at the telephony server 40. It will thus be appreciated by those skilled in the art that these elements need not form part of a telephony server that does not serve as an interface to a circuit switched network and that included no telephony resources.

The network further includes a TNS resolver 46 for handling the interface between the telephony server 40 and the telephone number server 60. It establishes a connection with the telephony number server 60 when the telephony number server 60 is due to be activated. It will preferably also deal with the administration of the IP addresses to the telephony number server 60 such as defining new numbers and updating the telephony number server 60 when subscribers are connected or disconnected. While the administration functions of the TNS resolver 46 are incorporated in the telephony server 40, it will be understood by those skilled in the art that a separate network administration node remote from the telephony server 40 could provide this function.

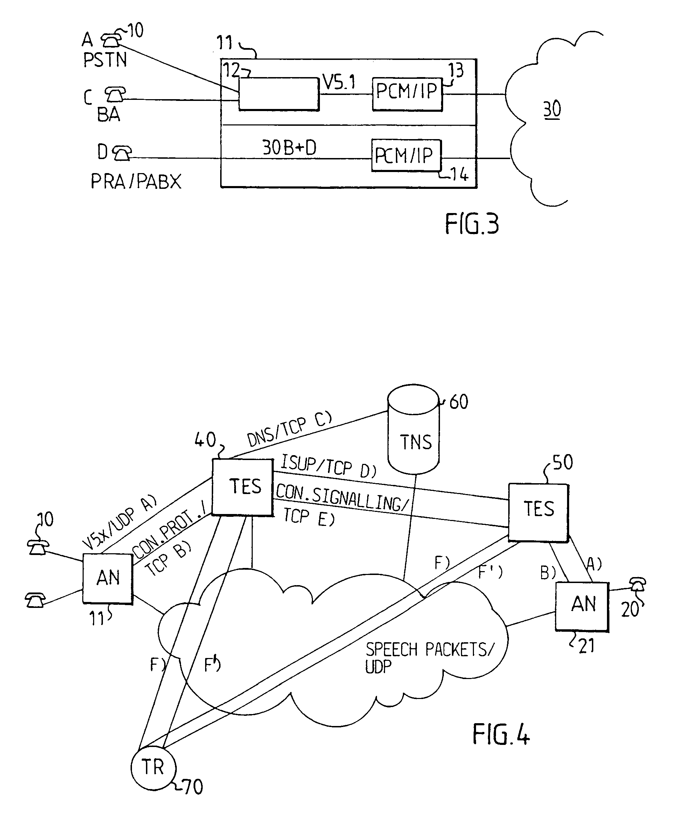

The access node 11 is illustrated in Fig. 3. A number of subscribers A, C and D are connected to the access node 11. The subscribers access this node 11 in the traditional circuit switched manner, that is via a two-wire PSTN terminal for subscriber A, an ISDN BA (basic rate access, 2B+D) terminal for subscriber C or an ISDN PRA (primary rate access, 30B+D) terminal for subscriber D which is illustrated as a PABX. The PSTN and ISDN BA terminals are connected to a signalling function 12 which essentially performs the task of a conventional V5.x access node. In this function 12 signalling to or from the two-wire subscriber is collected and relayed into or out of a 64kbps signalling channel with 2 Mbps pulse code modulation (PCM). A PCM to IP converter 13 is coupled to this signalling function 12 and packs the 64kbps channel to IP packets and routes these packets to the correct destination in the IP network. This routing is performed under control of the telephony server 40. The PCM to IP converter also performs the inverse conversion and unpacks the IP packets to a 64 kbps bit stream. The primary rate access (PRA) interface is likewise provided with a PCM to IP converter 14 which performs a similar function. While these converters 13, 14 are depicted as separate entities in Fig. 3, it will be understood by those skilled in the art that the same functional block could perform the packing, unpacking and routing functions for both interfaces.

The different forms of signalling occurring between the various elements over the computer network 30 are summarised in the schematic of Fig. 4. All protocols are carried on IP. The superimposed protocols are preferably 'standard' or commonly used protocols that allow network elements to be interchanged with equipment from different vendors. The so-called standard protocols are preferably well-established ITU protocols that are readily understood by the counterpart circuit switched network elements. This also allows the various services supported by commonly used protocols to be retained. Accordingly, the signalling between the access node 11 and the telephony server 40 at call setup and for communicating routing information to the access node 11 utilises a traffic protocol A] such as V5.x or similar over UDP. For ISDN primary rate access, DSS1 over UDP is utilised. A connection protocol B] is also provided for and would typically be V5.x BCC over TCP. Communication between two telephony servers connected to the IP-based network uses a traffic protocol D], which is typically a SS7 ISUP over TCP. A connection protocol E] is also provided which may be part of ISUP or external to ISUP. The telephony servers 40, 50 communicate with the telephony number server 60 for requesting the destination IP address associated with a particular b-number using a suitable protocol C] which is preferably a DNS protocol over TCP. Finally, two further protocols are provided for communication between a telephony server 40, 50 and telephony resources 70. These include a protocol F] to seize and control resources, and F'] the connection part of F]. F] and F'] do not need to be standard protocols since the telephony resource nodes 70 are effectively new elements that have no counterpart in a circuit switched system. For the actual packet transport IETF protocols are used. The same is true for lower address resolutions and new network elements.

Before calls are allowed over the access node 11, a signalling channel must be established between the signalling function part 12 of the access node 11 or PABX and the host telephony server 40. This is to establish a LAPV5 or LAPD data layer, respectively. An administrative procedure will initiate an order from the telephony server 40 to the PCM to IP converter 13, 14 in question to start sending or receiving IP packets containing information from the 64kbps signalling channel on the 30B+D or V5.x interface. The PCM to IP converter 13, 14 treats this signalling channel as a pure 64kbps bitstream, however, it could recognise the LAPV5 or LAPD frame format and send these frames as UDP/IP packets. Obviously, the same handling of the signalling channel must be performed on both sides of the link. Thus the PCM to IP converter in the gateway 41 of the telephony server 40 would operate in the same manner as the converters 13, 14 of the access node 11. Following this procedure, the normal start-up procedures between a V5.1 access node or PABX and host telephony server are performed. The signalling to and from the telephony server 40 would then be transparent to the PCM to IP converters 13, 14. When a call is to be established or released, the PCM to IP converter 13, 14 will receive further orders from the host telephony server 40 on establishing or releasing paths. Establishing a path means taking the 64kbps bitstream agreed upon between the telephony server 40 and the PABX or signalling function 12, packing this into UDP/IP packets, or unpacking it out of UDP/IP packets, and routing to the destination designated by the telephony server 40.

If telephony resources 70 are to be utilised in a call initiated by subscriber A to subscriber B these resources must first be seized by the host telephony server 40 utilising the protocol F] described above. Subsequently, the resource function would be routed through to the access network 11 connecting the calling subscriber A. Thus if a tone sender is seized as a resource, 'tone' packets would be sent from the telephony resource node 70 to the subscriber A, while speech packets are exchanged between subscribers A and B during a conversation.

In the case illustrated in Fig. 1, wherein telephony resources are available as part of the telephony server 40, a 'speech path' must be established initially between the access node 11 of a subscriber and the telephony server 40 when the call is set up at digital reception to enable the telephony resources to be made available to the call. This is indicated by the dashed line between the telephony server 40 and the access node 11 in Fig. 1. A similar path would be setup for speech packets if subscriber A were to make or receive a call to or from a subscriber connected to the circuit switched access network 80. In Fig. 1 the UDP/IP speech packets exchanged between subscriber A and subscriber B are similarly indicated by a dashed line across the packet switched network 30.

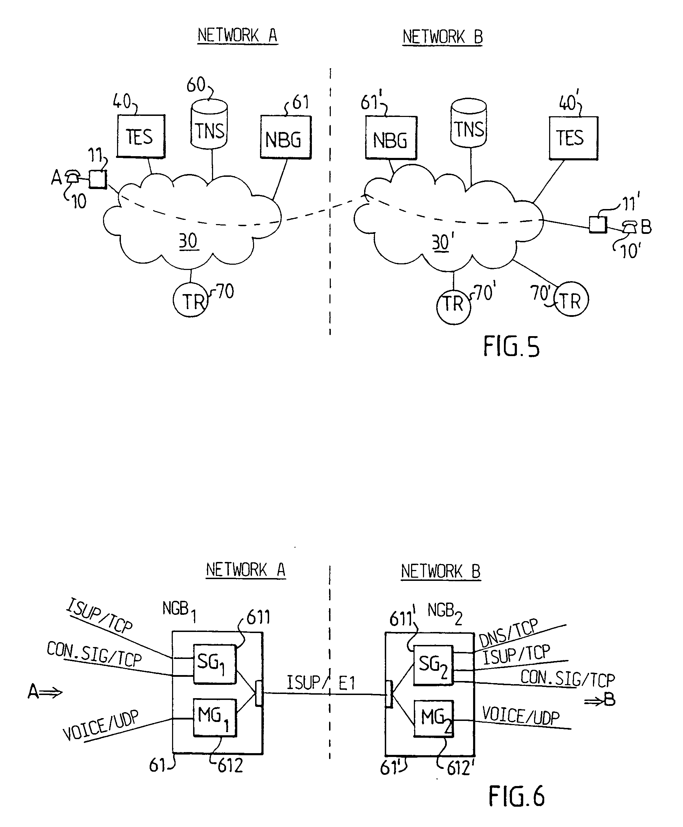

As mentioned above with reference to Fig. 1, the telephony number server 60 contains only the addressing information of end points within the network to which it is connected. If a call is destined for a subscriber connected to a neighbouring network, the telephony number server 60 in the network 30 will not have the destination address. Fig. 5 illustrates the situation when calls traverse two separate IP-based packet switched networks, network A and network B. In Fig. 5, the elements of network B are considered to be the same as those of network A and have been denoted by the same reference numerals modified by a prime symbol. In Fig. 5 IP network border gateways 61, 61' are connected to each computer network 30, 30'. These gateways 61, 61' may be separate elements in the network or they may be part of the associated telephony server 40, 40'. The network border gateways 61, 61' deal with communications between different IP based networks, or IP between IP based networks run by different operators. The manner in which this is done depends on the how operators of adjacent networks agree to work together.

According to a first embodiment of the present invention, each telephony number server 60, 60' in a first network 30 holds the addresses of network border gateways 61, 61' in adjacent networks. When a call from network A is destined for network B, the telephony number server 60 of network A will furnish the telephony server 40 of network A with the IP addresses of the network border gateway 61' to the required terminating or transit network, in this case network B. When the call enters the terminating network through the interconnection point between the networks A and B, the terminating network border gateway 61' would query its telephony number server 60' to determine where to terminate the call. A call between networks thus provokes two queries to telephony number servers 60, 60', namely a query from telephony server 40 to the telephony number server 60 in network A and a query from the network border gateway 61' to the telephony number server 61' in network B.

In a second embodiment according to the present invention, the telephony number server 40 of a network would not contain the addresses of network border gateways 61' in foreign networks but instead holds the addresses of the border gateways 61 in its own network. The telephony number server 60 thus only contains the addresses of the real endpoints to its own network. The network border gateways 61 would then store the addresses of neighbouring networks' border gateways provided by the operators of these networks. All calls between neighbouring networks would then be constrained to go through these network border gateways.

Figs. 6 to 8 show examples of network border gateways 61, 61' that operate according to the latter embodiment. In these embodiments the network border gateways 61, 61' are separate from the telephony server 40, 40' and are dedicated for both incoming and outgoing calls. Like parts have been denoted by like reference numerals in these three figures.

Fig. 6 shows two network border gateways 61, 61' NGB1 and NGB 2 that are linked by a circuit switched interface. A first network border gateway 61 belongs to network A owned by a first operator, the second network border gateway 61' belongs to a network owned by a second operator. The border between the two IP based networks A and B is illustrated by the dashed line. Each network border gateway 61, 61' includes a signalling gateway SG1 611, SG2 611' for exchanging standard telephony protocol messages and a connections signalling protocol CONSIG, and a message gateway MG1 612, MG2 612' for the exchange of voice data. The transition between an IP based format to a circuit switched format increases the delay of the voice stream, however the interface is relatively easy to monitor for statistical functions and policing or the like. The interface between the network border gateways 61, 61' is a standard telephony interface, such as ISUP over E1. The signalling gateway 1 SG1 receives an address for speech from the local telephony server 40 consisting of an IP address and UDP port in the CONSIG protocol. This address points to the A subscriber side and is used by the MG1 to direct voice IP packets originating from subscriber B and received via a timeslot on the circuit switched interface to subscriber A. The address for the voice stream originating from subscriber A to subscriber B is provided by network border gateway NGB 2 61' after it has interrogated its local telephony number server. This is sent to NGB1 61 by the signalling gateway SG2 via the CONSIG protocol. The voice stream from A to B will be sent from A in packets having a destination address of MG1, MG1 unpacks the voice stream and inserts it onto a timeslot. MG2 repacks the voice stream into IP packets with the destination address of B. The reverse process occurs for the voice stream from B to A. In this embodiment, the IP/UDP addresses of the two networks need not be coordinated; the network border gateways NGB1 and NGB2 need only be associated via CIC timeslots on a per call basis.

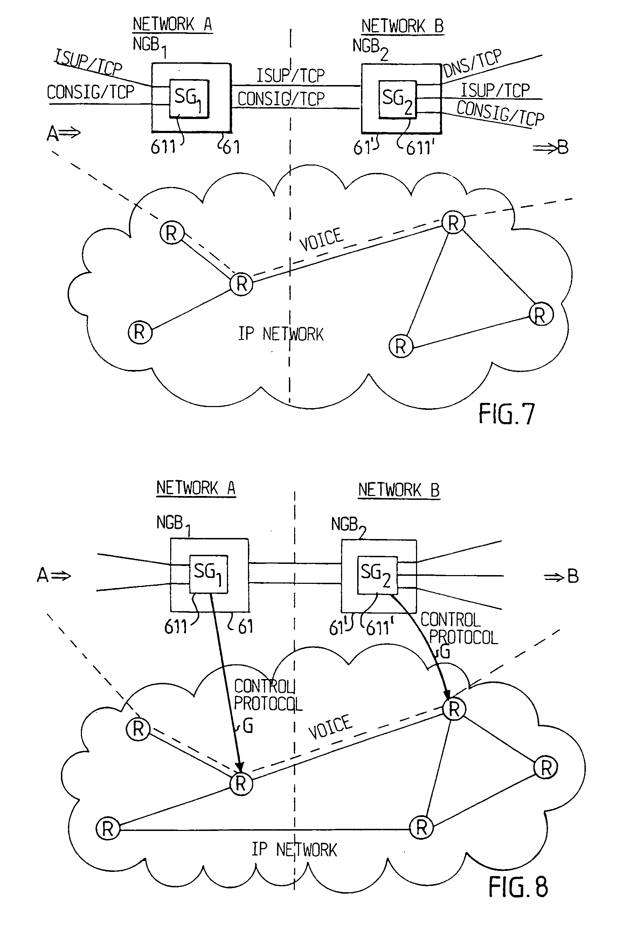

In the embodiment shown in Fig. 7 the voice steam passes via the IP network as is illustrated by the network of connected routers R. The network border gateways 61, 61' thus do not comprise a message gateway but have only a signalling gateway SG 611. As for the previous embodiment, the signalling gateways 611, 611' exchange ISUP/TCP messages and CONSIG/TCP messages (both over IP) with elements within their own networks. However, these messages are also exchanged in the interface between the network border gateways 61, 61' which is an IP based interface. The CONSIG protocol is not terminated. The CONSIG protocol transports the addresses of A to B and B to A. The voice packets are transferred directly through the IP based network without control by the network border gateways 61, 61'. However, the interface between the two adjacent networks A and B is configured such that and all voice traffic between the operators networks will always go between a designated pair or set of routers. This is illustrated by the solid lines between routers R representing possible paths. In this manner measurements and policing functions may still be performed at these designated routers.

In the third embodiment shown in Fig. 8, the arrangement of the network border gateways 61, 61' is very similar to that shown in Fig. 7 with the exception that the operators of network A and B can impose no physical limitations as to the route which voice traffic will take within the network. The IP based network may even be owned by a separate operator. In order for the operators of the network in which the call originates and terminates to constrain the voice traffic passes a certain point in the IP network, to enable measurement for example, a router control functionality is incorporated in the network border gateways 61, 61'. The router can be external to the network border gateways 61, 61' as shown in Fig. 8, or integrated in the network border gateway 61, 61' in the manner of the message gateway 612 of Fig. 6. The signalling gateway 611 will then not just pass on the end point addresses in the CONSIG protocol. Instead an address received by the signalling gateway 611 will mapped onto an new address sent (in the manner of a proxy), and a control interface illustrated by the thick line in Fig. 8 and protocol G will order a router to pass a voice stream coming in on one interface out onto another interface.

The arrangement of the telephony number server 60 essentially produces a flat, non-hierarchical structure, wherein neither the IP addresses nor the e.164 numbering plan need be co-ordinated with other network administrations. The only co-ordination required concerns the interconnection points, or network border gateways 6, to other networks. This structure thus utilises the benefits of IP switching and of the more well-structured e.164 numbering plan, where each network administrator is a higher degree of freedom in defining numbering.

The above described arrangement provides a means of bringing an IP-based network closer to the subscriber by replacing the underlying circuit switched transport network with that of an IP-based packet switched network, while retaining the costly elements of a circuit switched network.

## Claims

1. A method for establishing a telephone call between a subscriber and a further party through a computer network (30), said subscriber being connected to a telephone exchange (40), capable of handling circuit switched calls, through the computer network (30), said method being
**characterised by**
controlling the traffic across the computer network (30) by means of the telephone exchange (40), said control involving formulating messages using a user-to-network protocol (A],B]) to establish a telephone call, converting said messages into an IP-based network protocol format for transmission between said subscriber and telephone exchange (40, 50) and exchanging the converted messages between said subscriber and said telephone exchange.

2. A method as claimed in claim 1, **characterised by**
providing the subscriber with routing information indicating an address of the further party, and
establishing a voice connection at least in part across the computer network between the subscriber and the further party.

3. A method as claimed in claim 1 or 2, **characterised by**
using said telephone exchange (40), interrogating a conversion device (60) to obtain the address of the further party.

4. A method as claimed in claim 3, **characterised in that** said conversion device (60, 60') provides the address of a terminal device (61, 61') in an adjacent network (30') when the further party is not directly or indirectly connected to the computer network (30).

5. A method as claimed in claim 3, **characterised in that** said conversion device (60, 60') provides the address of a terminal device (61) in the same network as said conversion device, said method further including interrogating said terminal device to obtain the address of the further party.

6. A method as claimed in any previous claim, **characterised by** providing telephony resources (45, 70) coupled to said computer network (30), the method further including: seizing said telephony resources (70) and establishing a transmission path between the telephony resources and the subscriber.

7. A method as claimed in claim 6, **characterised in that** said transmission path is a speech path using an IP-based network protocol format.

8. A method as claimed in any previous claim, **characterised in that** said computer network (30) is the Internet.

9. Telecommunication system including a telephone exchange (40, 50), at least one subscriber for voice traffic and a computer network (30) interposed between said subscriber and telephone exchange (40, 50), capable of handling circuit switched calls, **characterised in that** the telephone exchange is a telephone exchange according to claim 21 or 22.

10. Telecommunication system as claimed in claim 9, **characterised in that** said telephone exchange (40, 50) is connected to a PSTN and/or ISDN network (80, 90).

11. Telecommunication system as claimed in claim 9 or 10, **characterised in that** said user-to-network protocol is one of a V-series signalling and traffic protocol and DSS1.

12. Telecommunication system as claimed in any one of claims 9 to 11, **characterised by** means (60, 60') interfaced with said computer network (30) for converting a number identifying a called party to a computer network address.

13. Telecommunication system as claimed in claim 12, **characterised by** means (47) in said telephone exchange (40) for transmitting a conversion request to said conversion means (70) using an IP-based network protocol (C]).

14. Telecommunication system as claimed in any one of claims 9 to 13, **characterised by** means (44) in said telephone exchange for establishing a transmission path between subscribers (10, 11, 20, 21) connected to said computer network (30).

15. Telecommunications system as claimed in any one of claims 9 to 14, **characterised by** network terminating means (61) for transferring address information between parties to a call in adjacent IP based networks.

16. Telecommunication system as claimed in claim 15, **characterised in that** said network terminating means (60) is adapted to interrogate converting means (61) of the network to obtain routing information for a called party when a call from an adjacent network (30') is routed to said network terminating means (61).

17. Telecommunication system as claimed in claim 12 or 13, **characterised in that** said conversion means (60) includes routing information for routing a call to terminating means (61) located in the same IP-based network (30') when a called party is located outside the network (30) connected to the converting means (60).

18. Telecommunication system as claimed in any one of claims 9 to 17, **characterised by** means (45, 70) for providing telephony resources including means (40, F], F']) for establishing a speech path between said resource means (70) and a party to a call using a user-to-network protocol in an IP-based protocol format over the computer network (30).

19. Telecommunication system as claimed in claim 18, **characterised in that** said telephony resource means (70) are located remote from said telephone exchange and include interface means for said computer network (30).

20. Telecommunication system as claimed in claim 18, **characterised in that** said telephony resource means (45) are located in said telephone exchange.

21. A telephone exchange capable of handling circuit switched calls, including means (43) for connecting to an IP based packet switched network, **characterised in that** it includes control means for controlling the traffic across the computer network (30), said control means including means (43) for converting messages received in an IP based network protocol to a user-to-network protocol, means for converting messages originating in said exchange from a user-to-network protocol to an IP based network protocol and means for controlling the transmission of said converted user-to-network protocol messages to a subscriber for establishing a telephone call through the IP based network.

22. A telephone exchange as claimed in claim 21, **characterised by** means (44) for establishing a voice transmission path between subscribers (10, 20, 11, 21) connected to said packet switched network.

## Patentansprüche

1. Verfahren zum Herstellen eines Telefonanrufs zwischen einem Abonnenten und einer weiteren Partei über ein Computernetzwerk (30), wobei der Abonnent mit einer Fernsprechvermittlungsstelle (40) verbunden ist, die leitungsvermittelte Anrufe handhaben kann, über ein Computernetzwerk (30), wobei das Verfahren durch Folgendes **gekennzeichnet** ist:
Steuern des Verkehrs über das Computernetzwerk (30) mittels der Fernsprechvermittlungsstelle (40), wobei die Steuerung das Formulieren von Mitteilungen unter Gebrauch eines Benutzer-zu-Netzwerkprotokolls (A,]B]) umfasst, um einen Telefonanruf zu erstellen, wobei die Mitteilungen in ein IP-basiertes Netzwerkprotokollformat für die Übertragung zwischen dem Abonnenten und der Fernsprechvermittlungsstelle (40, 50) umgewandelt werden, und wobei die umgewandelten Mitteilungen zwischen dem Abonnenten und der Fernsprechvermittlungsstelle ausgetauscht werden.

2. Verfahren nach Anspruch 1, **dadurch gekennzeichnet, dass** dem Abonnenten Routing-Information bereitgestellt wird, die eine Adresse der weiteren Partei angibt, und dass eine Sprachverbindung zumindest zum Teil über das Computernetzwerk zwischen dem Abonnenten und der weiteren Partei erstellt wird.

3. Verfahren nach Anspruch 1 oder 2, **dadurch gekennzeichnet, dass** unter Gebrauch der Fernsprechvermittlungsstelle (40) ein Umwandlungsgerät (60) abgefragt wird, um die Adresse der weiteren Partei zu erhalten.

4. Verfahren nach Anspruch 3, **dadurch gekennzeichnet, dass** das Umwandlungsgerät (60, 60') die Adresse eines Terminalgeräts (61, 61') in einem benachbarten Netzwerk (30') bereitstellt, wenn die weitere Partei nicht direkt oder indirekt mit dem Computernetzwerk (30) verbunden ist.

5. Verfahren nach Anspruch 3, **dadurch gekennzeichnet, dass** das Umwandlungsgerät (60, 60') die Adresse eines Terminalgeräts (61) in dem gleichen Netzwerk bereitstellt wie das Umwandlungsgerät, wobei das Verfahren ferner das Abfragen des Terminalgeräts umfasst, um die Adresse der weiteren Partei zu erzielen.

6. Verfahren nach einem der vorhergehenden Ansprüche, **dadurch gekennzeichnet, dass** Telefonieressourcen (45, 70) bereitgestellt werden, die mit dem Computernetzwerk (30) gekoppelt sind, wobei das Verfahren ferner Folgendes umfasst: Erfassen der Telefonressourcen (70) und Erstellen eines Übertragungspfads zwischen den Telefonieressourcen und dem Abonnenten.

7. Verfahren nach Anspruch 6, **dadurch gekennzeichnet, dass** der Übertragungspfad ein Sprachpfad ist, der ein IP-basiertes Netzwerkprotokollformat verwendet.

8. Verfahren nach einem der vorhergehenden Ansprüche, **dadurch gekennzeichnet, dass** das Computernetzwerk (30) das Internet ist.

9. Telekommunikationssystem, das eine Fernsprechvermittlungsstelle (40, 50), mindestens einen Abonnenten für Sprachverkehr und ein Computernetzwerk (30) umfasst, welches zwischen dem Abonnenten und der Fernsprechvermittlungsstelle (40, 50) eingefügt ist, die leitungsvermittelte Anrufe handhaben kann, **dadurch gekennzeichnet, dass** die Fernsprechvermittlungsstelle eine Fernsprechvermittlungsatelle nach Anspruch 21 oder 22 ist.

10. Telekommunikationssystem nach Anspruch 9, **dadurch gekennzeichnet, dass** die Fernsprechvermittlungsstelle (40, 50) mit einem PSTN- und/oder ISDN-Netzwerk (80, 90) verbunden ist.

11. Telekommunikationssystem nach Anspruch 9 oder 10, **dadurch gekennzeichnet, dass** das Benutzer-zu-Netzwerkprotokoll entweder ein V-Serien-Signalisierungsprotokoll oder ein Verkehrsprotokoll oder DSS1 ist.

12. Telekommunikationssystem nach einem der Ansprüche 9 bis 11, **gekennzeichnet durch** Mittel (60, 60'), die eine Schnittstelle mit dem Computernetzwerk (30) haben, um eine Nummer, die eine angerufene Partei identifiziert, in eine Computernetzwerkadresse umzuwandeln.

13. Telekommunikationssystem nach Anspruch 12, **gekennzeichnet durch** Mittel (47) in der Fernsprechvermittlungsstelle (40) zum Übertragen einer Umwandlungsanfrage an das Umwandlungsmittel (70) unter Gebrauch eines IP-basierten Netzwerkprotokolls (C]).

14. Telekommunikationssystem nach einem der Ansprüche 9 bis 13, **gekennzeichnet durch** Mittel (44) in der Fernsprechvermittlungsstelle zum Erstellen eines Übertragungspfads zwischen Abonnenten (10, 11, 20, 21), die an das Computernetzwerk (30) angeschlossen sind.

15. Telekommunikationssystem nach einem der Ansprüche 9 bis 14, **gekennzeichnet durch** Netzwerkabschlussmittel (61) zum Übertragen von Adressinformation zwischen Parteien zu einem Anruf in benachbarten IP-basierten Netzwerken.

16. Telekommunikationssystem nach Anspruch 15, **dadurch gekennzeichnet, dass** das Netzwerkabschlussmittel (60) Umwandlungsmittel (61) des Netzwerks abfragen kann, um Routinginformation für eine angerufene Partei zu erzielen, wenn ein Anruf von einem benachbarten Netzwerk (30') zu dem Netzwerkabschlussmittel (61) geroutet wird.

17. Telekommunikationssystem nach Anspruch 12 oder 13, **dadurch gekennzeichnet, dass** das Umwandlungsmittel (60) Routinginformation zum Routen eines Anrufs zu dem Abschlussmittel (61) umfasst, das sich in dem gleichen IP-basierten Netzwerk (30') befindet, wenn sich eine angerufene Partei außerhalb des Netzwerks (30), das an das Umwandelmittel (60) angeschlossen ist, befindet.

18. Telekommunikationssystem nach einem der Ansprüche 9 bis 17, **gekennzeichnet durch** Mittel (45, 70) zum Bereitstellen von Telefonieressourcen, die Mittel (40, F], F']) umfassen, um einen Sprachpfiad zwischen den Ressourcenmitteln (70) und einer Partei eines Anrufs unter Gebrauch eines Benutzer-zu-Netzwerkprotokolls in einem IP-basierten Protokollformat über das Computernetzwerk (30) herzustellen.

19. Telekommunikationssystem nach Anspruch 18, **dadurch gekennzeichnet, dass** die Telefonieressourcenmittel (70) von der Fernsprechvermittlungsstelle entfernt liegen und Schnittstellenmittel für das Computernetzwerk (30) umfassen.

20. Telekommunikationssystem nach Anspruch 18, **dadurch gekennzeichnet, dass** sich die Telefonressourcenmittel (45) in der Fernsprechvermittlungsstelle befinden.

21. Fernsprechvermittlungsstelle, die leitungsvermittelte Anrufe handhaben kann, die Mittel (43) zum Verbinden mit einem IP-basierten paketvermittelten Netzwerk umfasst, **dadurch gekennzeichnet, dass** sie Steuermittel zum Steuern des Verkehrs über das Computernetzwerk (30) umfasst, wobei die Steuermittel Mittel (43) umfasse, um Mitteilungen, die in einem IP-basierten Netzwerkprotokoll empfangen werden, in ein Benutzer-zu-Netzwerkprotokoll umzuwandeln, Mittel zum Umwandeln von Mitteilungen, die aus der Fernsprechvermittlungsstelle stammen, von einem Benutzer-zu-Netzwerkprotokoll in ein IP-basiertes Netzwerkprotokoll, und Mittel zum Steuern der Übertragung der umgewandelten Benutzer-zu-Netzwerk-Protokollmitteilungen zu einem Abonnenten zum Herstellen eines Telefonanrufs durch das IP-basierte Netzwerk.

22. Fernsprechvermittlungsstelle nach Anspruch 21, **gekennzeichnet durch** Mittel (44) zum Herstellen eines Sprachübertragungspfads zwischen Abonnenten (10, 20, 11, 21), die an das paketvermittelte Netzwerk angeschlossen sind.

## Revendications

1. Procédé d'établissement d'un appel téléphonique entre un abonné et une autre partie, au travers d'un réseau d'ordinateurs (30), ledit abonné étant connecté à un central téléphonique (40) capable de gérer des appels à commutation de circuits sur le réseau d'ordinateurs (30), ledit procédé étant **caractérisé par** le fait de commander le trafic sur le réseau d'ordinateurs (30) au moyen du central téléphonique (40), ladite commande comprenant la formulation de messages en utilisant un protocole utilisateur-réseau (A], B]) pour établir un appel téléphonique, la conversion desdits messages en un format de protocole de réseau de type IP pour la transmission entre ledit abonné et ledit central téléphonique (40, 50) et l'échange des messages convertis entre ledit abonné et ledit central téléphonique.

2. Procédé selon la revendication 1, **caractérisé par** les étapes consistant à :
fournir à l'abonné des informations de routage indiquant une adresse de l'autre partie, et
établir une connexion vocale passant au moins partiellement au travers du réseau d'ordinateurs entre l'abonné et l'autre partie.

3. Procédé selon la revendication 1 ou 2, **caractérisé par** l'étape consistant
à l'aide dudit central téléphonique (40), à interroger un dispositif de conversion (60) pour obtenir l'adresse de l'autre partie.

4. Procédé selon la revendication 3, **caractérisé en ce que** ledit dispositif de conversion (60, 60') fournit l'adresse d'un dispositif terminal (61, 61') dans un réseau adjacent (30') lorsque l'autre partie n'est pas connectée directement ou indirectement au réseau d'ordinateurs (30).

5. Procédé selon la revendication 3, **caractérisé en ce que** ledit dispositif de conversion (60, 60') fournit l'adresse d'un dispositif terminal (61) dans le même réseau que ledit dispositif de conversion, ledit procédé comprenant en outre l'étape consistant à interroger ledit dispositif terminal pour obtenir l'adresse de l'autre partie.

6. Procédé selon l'une quelconque des revendications précédentes, **caractérisé par** la fourniture de ressources téléphoniques (45, 70) couplées audit réseau d'ordinateurs (30), le procédé comprenant en outre les étapes consistant à : réserver lesdites ressources téléphoniques (70) et établir un trajet de transmission entre les ressources téléphoniques et l'abonné.

7. Procédé selon la revendication 6, **caractérisé en ce que** ledit trajet de transmission est un trajet de parole utilisant un format de protocole de réseau de type IP.

8. Procédé selon l'une quelconque des revendications précédentes, **caractérisé en ce que** ledit réseau d'ordinateurs (30) est l'internet.

9. Système de télécommunication comprenant un central téléphonique (40, 50), au moins un abonné au trafic vocal et un réseau d'ordinateurs (30) interposé entre ledit abonné et ledit central téléphonique (40, 50), capable de gérer des appels à commutation de circuits, **caractérisé en ce que** le central téléphonique est un central téléphonique selon la revendication 21 ou 22.

10. Système de télécommunication selon la revendication 9, **caractérisé en ce que** ledit central téléphonique (40, 50) est connecté à un réseau RTPC et/ou RNIS (80, 90).

11. Système de télécommunication selon la revendication 9 ou 10, **caractérisé en ce que** ledit protocole utilisateur-réseau est soit le protocole de signalisation et de trafic série V, soit le DSS1.

12. Système de télécommunication selon l'une quelconque des revendications 9 à 11, **caractérisé par** un moyen (60, 60'), interfacé avec ledit réseau d'ordinateurs (30), destiné à convertir un numéro identifiant une partie appelée en une adresse du réseau d'ordinateurs.

13. Système de télécommunication selon la revendication 12, **caractérisé par** un moyen (47), dans ledit central téléphonique (40), destiné à transmettre une demande de conversion audit moyen de conversion (70) en utilisant un protocole de réseau de type IP (C]).

14. Système de télécommunication selon l'une quelconque des revendications 9 à 13, **caractérisé par** un moyen (44), dans ledit central téléphonique, destiné à établir un trajet de transmission entre des abonnés (10, 11, 20, 21) connectés audit réseau d'ordinateurs (30).

15. Système de télécommunication selon l'une quelconque des revendications 9 à 14, **caractérisé par** un moyen de terminaison de réseau (61), destiné à transférer des informations d'adresse entre des parties à un appel dans des réseaux adjacents de type IP.

16. Système de télécommunication selon la revendication 15, **caractérisé en ce que** ledit moyen de terminaison de réseau (60) est conçu pour interroger un moyen de conversion (61) du réseau pour obtenir des informations de routage pour une partie appelée, lorsqu'un appel provenant d'un réseau adjacent (30') est routé vers ledit moyen de terminaison de réseau (61).

17. Système de télécommunication selon la revendication 12 ou 13, **caractérisé en ce que** ledit moyen de conversion (60) comprend des informations de routage afin de router un appel vers un moyen de terminaison (61) situé dans le même réseau de type IP (30') lorsqu'une partie appelée est située en dehors du réseau (30) connecté au moyen de conversion (60).

18. Système de télécommunication selon l'une quelconque des revendications 9 à 17, **caractérisé par** un moyen (45, 70) destiné à fournir des ressources téléphoniques comprenant un moyen (40, F], F']) destiné à établir un trajet de parole entre ledit moyen de ressources (70) et une partie à un appel, en utilisant un protocole utilisateur-réseau dans un format de protocole de type IP, sur le réseau d'ordinateurs (30).

19. Système de télécommunication selon la revendication 18, **caractérisé en ce que** ledit moyen de ressources téléphoniques (70) est situé à distance dudit central téléphonique et comprend un moyen d'interfaçage pour ledit réseau d'ordinateurs (30).

20. Système de télécommunication selon la revendication 18, **caractérisé en ce que** ledit moyen de ressources téléphoniques (45) est situé dans ledit central téléphonique.

21. Central téléphonique capable de gérer des appels à commutation de circuits, comprenant un moyen (43) de connexion à un réseau à commutation de paquets de type IP, **caractérisé en ce qu'**il comprend un moyen de commande destiné à commander le trafic sur le réseau d'ordinateurs (30), ledit moyen de commande comprenant un moyen (43) destiné à convertir des messages reçus dans un protocole de réseau de type IP en un protocole utilisateur-réseau, un moyen de conversion des messages provenant dudit central du protocole utilisateur-réseau au protocole de réseau de type IP et un moyen de commande de la transmission des messages convertis dans ledit protocole utilisateur-réseau à un abonné afin d'établir un appel téléphonique sur le réseau de type IP.

22. Central téléphonique selon la revendication 21, **caractérisé par** un moyen (44) destiné à établir un trajet de transmission vocale entre des abonnés (10, 20, 11, 21) connectés audit réseau à commutation de paquets.
